# EUROPEAN PATENT SPECIFICATION

(11) **EP 2 534 220 B1**
(45) Date of publication and mention of the grant of the patent: **25.11.2015**
(21) Application number: 11742725.2
(22) Date of filing: 09.02.2011
(51) Int. Cl.: C09K 8/584, E21B 43/16

(54) **METHOD AND COMPOSITION FOR ENHANCED HYDROCARBONS RECOVERY**
VERFAHREN UND ZUSAMMENSETZUNG ZUR AUSBEUTESTEIGERUNG VON KOHLENWASSERSTOFFEN
PROCÉDÉ ET COMPOSITION POUR RÉCUPÉRATION AMÉLIORÉE D'HYDROCARBURES

(30) Priority: 12.02.2010 US 303969 P
(43) Date of publication of application: 19.12.2012
(73) Proprietor: Shell Oil Company, Houston, TX 77252-2463 (US); Shell Internationale Research Maatschappij B.V., 2596 HR Den Haag (NL)
(72) Inventor: BARNES, Julian Richard, 1031 HW Amsterdam (NL); DIRKZWAGER, Hendrik, 1031 HW Amsterdam (NL); NAVARRETE, Reinaldo Conrado, Houston, Texas 77077 (US); SEMPLE, Thomas Carl, Friendswood, Texas 77546 (US)
(74) Representative: Matthezing, Robert Maarten
(86) International application number: PCT/US2011/024165
(87) International publication number: WO 2011/100301

(56) References cited:
- GB-A- 2 138 866
- US-A- 4 597 879
- US-A- 5 110 487
- US-A- 5 451 342
- US-A1- 2009 151 941
- US-A1- 2009 203 557
- US-A1- 2009 203 558
- US-A1- 2009 203 558

## Description

### Field of the Invention

The present invention generally relates to methods for recovery of hydrocarbons from hydrocarbon-bearing formations. More particularly, embodiments described herein relate to methods of enhanced hydrocarbons recovery and to compositions useful for that recovery that contain internal olefin sulfonates and viscosity reducing compounds.

### Background of the Invention

Hydrocarbons may be recovered from hydrocarbon-bearing formations by penetrating the formation with one or more wells. Hydrocarbons may flow to the surface through the wells. Conditions (e.g., permeability, hydrocarbon concentration, porosity, temperature, pressure, amongst others) of the hydrocarbon containing formation may affect the economic viability of hydrocarbon production from the hydrocarbon containing formation. A hydrocarbon-bearing formation may have natural energy (e.g., gas, water) to aid in mobilizing hydrocarbons to the surface of the hydrocarbon containing formation. Natural energy may be in the form of water. Water may exert pressure to mobilize hydrocarbons to one or more production wells. Gas may be present in the hydrocarbon-bearing formation (reservoir) at sufficient pressures to mobilize hydrocarbons to one or more production wells. The natural energy source may become depleted over time. Supplemental recovery processes may be used to continue recovery of hydrocarbons from the hydrocarbon containing formation. Examples of supplemental processes include waterflooding, polymer flooding, alkali flooding, thermal processes, solution flooding or combinations thereof.

In chemical enhanced oil recovery (EOR) the mobilization of residual oil saturation is achieved through surfactants which generate a sufficiently (ultra) low crude oil / water interfacial tension (IFT) to give a capillary number large enough to overcome capillary forces and allow the oil to flow (I. Chatzis and N. R. Morrows, "Correlation of capillary number relationship for sandstone". SPE Journal, Vol 29, pp 555-562, 1989).

Compositions and methods for enhanced hydrocarbons recovery utilizing an alpha olefin sulfate-containing surfactant component are known. U.S. Patents 4,488,976 and 4,537,253 describe enhanced oil or recovery compositions containing such a component. Compositions and methods for enhanced hydrocarbons recovery utilizing internal olefin sulfonates are also known. Such a surfactant composition is described in U.S. Patent 4,597,879.

U.S. Patent 4,979,564 describes the use of internal olefin sulfonates in a method for enhanced oil recovery using low tension viscous water flood. An example of a commercially available material described as being useful was ENORDET IOS 1720, a product of Shell Oil Company identified as a sulfonated C₁₇₋₂₀ internal olefin sodium salt. This material has a low degree of branching. U.S. Patent 5,068,043 describes a petroleum acid soap-containing surfactant system for waterflooding wherein a cosurfactant comprising a C₁₇₋₂₀ or a C₂₀₋₂₄ internal olefin sulfonate was used. In "Field Test of Cosurfactant-enhanced Alkaline Flooding" by Falls et al., Society of Petroleum Engineers Reservoir Engineering, 1994, the authors describe the use of a C₁₇₋₂₀ or a C₂₀₋₂₄ internal olefin sulfonate in a waterflooding composition with an alcohol alkoxylate surfactant to keep the composition as a single phase at ambient temperature without affecting performance at reservoir temperature significantly. The water had a salinity of about 0.4 wt% sodium chloride. It is also known to use certain alcohol alkoxysulfate surfactants. These materials, used individually, also have disadvantages under very severe conditions of salinity, hardness and temperature, in part because certain alcohol alkoxysulfate surfactants are not stable at high temperature, i.e., above about 70°C.

### Summary of the Invention

In an embodiment, hydrocarbons may be produced from a hydrocarbon containing formation containing crude oil by a method that includes treating at least a portion of the hydrocarbon containing formation with a hydrocarbon recovery composition which is comprised of a high molecular weight internal olefin sulfonate and a viscosity reducing compound. This material is effective over a salinity range of about 1% by weight or lower to about 10% by weight or higher and over a temperature range of from about 40 to 140°C.

The present invention provides a method of treating these crude oil containing formations which comprises (a) providing a hydrocarbon recovery composition to at least a portion of a crude oil containing formation, wherein the composition comprises a high molecular weight internal olefin sulfonate (IOS) and at least one viscosity reducing compound; and (b) allowing the composition to interact with hydrocarbons in the hydrocarbon containing formation. The high molecular weight internal olefin sulfonate comprises at least two internal olefin sulfonates selected from the group consisting of C₁₅₋₁₈ internal olefin sulfonates, C₁₉₋₂₃ internal olefin sulfonates, C₂₀₋₂₄ internal olefin sulfonates and C₂₄₋₂₈ internal olefin sulfonates.

In an embodiment, the hydrocarbon recovery composition is provided to the hydrocarbon containing formation by admixing it with water and/or brine from the formation. Preferably, the hydrocarbon recovery composition comprises from about 0.01 to about 2.0 wt% of the total water and/or brine/hydrocarbon recovery composition mixture (the injectable fluid). More important is the amount of actual active matter that is present in the injectable fluid (active matter is the surfactant, here the internal olefin sulfonate(s)). Thus, the amount of the internal olefin sulfonate in the injectable fluid may be from about 0.05 to about 1.0 wt%, preferably from about 0.1 to about 0.8 wt%. The injectable fluid is then injected into the hydrocarbon containing formation.

In an embodiment, a hydrocarbon containing composition may be produced from a hydrocarbon containing formation. The hydrocarbon containing composition may include any combination of hydrocarbons, internal olefin sulfonates, methane, water, carbon monoxide and ammonia.

### Brief Description of the Drawings

FIG. 1 depicts an embodiment of treating a hydrocarbon containing formation;
FIG. 2 depicts an embodiment of treating a hydrocarbon containing formation.

### Detailed Description of Embodiments

"Average carbon number" as used herein is determined by multiplying the number of carbon atoms of each internal olefin sulfonate in the mixture of internal olefin sulfonates by the mole percent of that internal olefin sulfonate and then adding the products.

"C₁₅₋₁₈ internal olefin sulfonate" as used herein means a mixture of internal olefin sulfonates wherein the mixture has an average carbon number of from about 16 to about 17 and at least 50% by weight, preferably at least 75% by weight, most preferably at least 90% by weight, of the internal olefin sulfonates in the mixture contain from 15 to 18 carbon atoms.

"C₁₉₋₂₃ internal olefin sulfonate" as used herein means a mixture of internal olefin sulfonates wherein the mixture has an average carbon number of from about 21 to about 23 and at least 50% by weight, preferably at least 60% by weight, of the internal olefin sulfonates in the mixture contain from 19 to 23 carbon atoms.

"C₂₀₋₂₄ internal olefin sulfonate" as used herein means a mixture of internal olefin sulfonates wherein the mixture has an average carbon number of from about 20.5 to about 23 and at least 50% by weight, preferably at least 65% by weight, most preferably at least 75% by weight, of the internal olefin sulfonates in the mixture contain from 20 to 24 carbon atoms.

"C₂₄₋₂₈ internal olefin sulfonate" as used herein means a blend of internal olefin sulfonates wherein the blend has an average carbon number of from 24.5 to 27 and at least 40% by weight, preferably at least 50% by weight, most preferably at least 60% by weight, of the internal olefin sulfonates in the blend contain from 24 to 28 carbon atoms.

Hydrocarbons may be produced from hydrocarbon formations through wells penetrating a hydrocarbon containing formation. "Hydrocarbons" are generally defined as molecules formed primarily of carbon and hydrogen atoms such as oil and natural gas. Hydrocarbons may also include other elements, such as, but not limited to, halogens, metallic elements, nitrogen, oxygen and/or sulfur. Hydrocarbons derived from a hydrocarbon formation may include, but are not limited to, kerogen, bitumen, pyrobitumen, asphaltenes, resins, saturates, naphthenic acids, oils or combinations thereof. Hydrocarbons may be located within or adjacent to mineral matrices within the earth. Matrices may include, but are not limited to, sedimentary rock, sands, silicilytes, carbonates, diatomites and other porous media.

A "formation" includes one or more hydrocarbon containing layers, one or more non-hydrocarbon layers, an overburden and/or an underburden. An "overburden" and/or an "underburden" includes one or more different types of impermeable materials. For example, overburden/underburden may include rock, shale, mudstone, or wet/tight carbonate (i.e., an impermeable carbonate without hydrocarbons). For example, an underburden may contain shale or mudstone. In some cases, the overburden/underburden may be somewhat permeable. For example, an underburden may be composed of a permeable mineral such as sandstone or limestone. In some embodiments, at least a portion of a hydrocarbon containing formation may exist at less than or more than 1000 feet below the earth's surface.

Properties of a hydrocarbon containing formation may affect how hydrocarbons flow through an underburden/overburden to one or more production wells. Properties include, but are not limited to, mineralogy, porosity, permeability, pore size distribution, surface area, salinity or temperature of formation. Overburden/underburden properties in combination with hydrocarbon properties, such as, capillary pressure (static) characteristics and relative permeability (flow) characteristics may affect mobilization of hydrocarbons through the hydrocarbon containing formation.

Permeability of a hydrocarbon containing formation may vary depending on the formation composition. A relatively permeable formation may include heavy hydrocarbons entrained in, for example, sand or carbonate. "Relatively permeable," as used herein, refers to formations or portions thereof, that have an average permeability of 10 millidarcy or more. "Relatively low permeability" as used herein, refers to formations or portions thereof that have an average permeability of less than about 10 millidarcy. One darcy is equal to about 0.99 square micrometers. An impermeable portion of a formation generally has a permeability of less than about 0.1 millidarcy. In some cases, a portion or all of a hydrocarbon portion of a relatively permeable formation may include predominantly heavy hydrocarbons and/or tar with no supporting mineral grain framework and only floating (or no) mineral matter (e.g., asphalt lakes).

Fluids (e.g., gas, water, hydrocarbons or combinations thereof) of different densities may exist in a hydrocarbon containing formation. A mixture of fluids in the hydrocarbon containing formation may form layers between an underburden and an overburden according to fluid density. Gas may form a top layer, hydrocarbons may form a middle layer and water may form a bottom layer in the hydrocarbon containing formation. The fluids may be present in the hydrocarbon containing formation in various amounts. Interactions between the fluids in the formation may create interfaces or boundaries between the fluids. Interfaces or boundaries between the fluids and the formation may be created through interactions between the fluids and the formation. Typically, gases do not form boundaries with other fluids in a hydrocarbon containing formation. In an embodiment, a first boundary may form between a water layer and underburden. A second boundary may form between a water layer and a hydrocarbon layer. A third boundary may form between hydrocarbons of different densities in a hydrocarbon containing formation. Multiple fluids with multiple boundaries may be present in a hydrocarbon containing formation, in some embodiments. It should be understood that many combinations of boundaries between fluids and between fluids and the overburden/underburden may be present in a hydrocarbon containing formation.

Production of fluids may perturb the interaction between fluids and between fluids and the overburden/underburden. As fluids are removed from the hydrocarbon containing formation, the different fluid layers may mix and form mixed fluid layers. The mixed fluids may have different interactions at the fluid boundaries. Depending on the interactions at the boundaries of the mixed fluids, production of hydrocarbons may become difficult. Quantification of the interactions (e.g., energy level) at the interface of the fluids and/or fluids and overburden/underburden may be useful to predict mobilization of hydrocarbons through the hydrocarbon containing formation.

Quantification of energy required for interactions (e.g., mixing) between fluids within a formation at an interface may be difficult to measure. Quantification of energy levels at an interface between fluids may be determined by generally known techniques (e.g., spinning drop tensionmeter, Langmuir trough). Interaction energy requirements at an interface may be referred to as interfacial tension. "Interfacial tension" as used herein, refers to a surface free energy that exists between two or more fluids that exhibit a boundary. A high interfacial tension value (e.g., greater than about 10 dynes/cm) may indicate the inability of one fluid to mix with a second fluid to form a fluid emulsion. As used herein, an "emulsion" refers to a dispersion of one immiscible fluid into a second fluid by addition of a composition that reduces the interfacial tension between the fluids to achieve stability. The inability of the fluids to mix may be due to high surface interaction energy between the two fluids. Low interfacial tension values (e.g., less than about 1 dyne/cm) may indicate less surface interaction between the two immiscible fluids. Less surface interaction energy between two immiscible fluids may result in the mixing of the two fluids to form an emulsion. Fluids with low interfacial tension values may be mobilized to a well bore due to reduced capillary forces and subsequently produced from a hydrocarbon containing formation.

Fluids in a hydrocarbon containing formation may wet (e.g., adhere to an overburden/underburden or spread onto an overburden/underburden in a hydrocarbon containing formation). As used herein, "wettability" refers to the preference of a fluid to spread on or adhere to a solid surface in a formation in the presence of other fluids. Methods to determine wettability of a hydrocarbon formation are described by Craig, Jr. in "The Reservoir Engineering Aspects of Waterflooding", 1971 Monograph Volume 3, Society of Petroleum Engineers. In an embodiment, hydrocarbons may adhere to sandstone in the presence of gas or water. An overburden/underburden that is substantially coated by hydrocarbons may be referred to as "oil wet." An overburden/underburden may be oil wet due to the presence of polar and/or or surface-active components (e.g., asphaltenes) in the hydrocarbon containing formation. Formation composition (e.g., silica, carbonate or clay) may determine the amount of adsorption of hydrocarbons on the surface of an overburden/underburden. In some embodiments, a porous and/or permeable formation may allow hydrocarbons to more easily wet the overburden/underburden. A substantially oil wet overburden/underburden may inhibit hydrocarbon production from the hydrocarbon containing formation. In certain embodiments, an oil wet portion of a hydrocarbon containing formation may be located at less than or more than 1000 feet below the earth's surface.

A hydrocarbon formation may include water. Water may interact with the surface of the underburden. As used herein, "water wet" refers to the formation of a coat of water on the surface of the overburden/underburden. A water wet overburden/underburden may enhance hydrocarbon production from the formation by preventing hydrocarbons from wetting the overburden/underburden. In certain embodiments, a water wet portion of a hydrocarbon containing formation may include minor amounts of polar and/or or surface-active components.

Water in a hydrocarbon containing formation may contain minerals (e.g., minerals containing barium, calcium, or magnesium) and mineral salts (e.g., sodium chloride, potassium chloride, magnesium chloride). Water salinity, pH and/or water hardness of water in a formation may affect recovery of hydrocarbons in a hydrocarbon containing formation. As used herein "salinity" refers to an amount of dissolved solids in water. "Water hardness," as used herein, refers to a concentration of divalent ions (e.g., calcium, magnesium) in the water. Water salinity and hardness may be determined by generally known methods (e.g., conductivity, titration). As water salinity increases in a hydrocarbon containing formation, interfacial tensions between hydrocarbons and water may be increased and the fluids may become more difficult to produce.

A hydrocarbon containing formation may be selected for treatment based on factors such as, but not limited to, thickness of hydrocarbon containing layers within the formation, assessed liquid production content, location of the formation, salinity content of the formation, temperature of the formation, and depth of hydrocarbon containing layers. Initially, natural formation pressure and temperature may be sufficient to cause hydrocarbons to flow into well bores and out to the surface. Temperatures in a hydrocarbon containing formation may range from about 0°C to about 300°C, but are typically less than 150 °C. The composition of the present invention is particularly advantageous when used at high temperature because the internal olefin sulfonate is stable at such temperatures. As hydrocarbons are produced from a hydrocarbon containing formation, pressures and/or temperatures within the formation may decline. Various forms of artificial lift (e.g., pumps, gas injection) and/or heating may be employed to continue to produce hydrocarbons from the hydrocarbon containing formation. Production of desired hydrocarbons from the hydrocarbon containing formation may become uneconomical as hydrocarbons are depleted from the formation.

Mobilization of residual hydrocarbons retained in a hydrocarbon containing formation may be difficult due to viscosity of the hydrocarbons and capillary effects of fluids in pores of the hydrocarbon containing formation. As used herein "capillary forces" refers to attractive forces between fluids and at least a portion of the hydrocarbon containing formation. In an embodiment, capillary forces may be overcome by increasing the pressures within a hydrocarbon containing formation. In other embodiments, capillary forces may be overcome by reducing the interfacial tension between fluids in a hydrocarbon containing formation. The ability to reduce the capillary forces in a hydrocarbon containing formation may depend on a number of factors, including, but not limited to, the temperature of the hydrocarbon containing formation, the salinity of water in the hydrocarbon containing formation, and the composition of the hydrocarbons in the hydrocarbon containing formation.

As production rates decrease, additional methods may be employed to make a hydrocarbon containing formation more economically viable. Methods may include adding sources of water (e.g., brine, steam), gases, polymers, monomers or any combinations thereof to the hydrocarbon formation to increase mobilization of hydrocarbons.

In an embodiment, a hydrocarbon containing formation may be treated with a flood of water. A waterflood may include injecting water into a portion of a hydrocarbon containing formation through injections wells. Flooding of at least a portion of the formation may water wet a portion of the hydrocarbon containing formation. The water wet portion of the hydrocarbon containing formation may be pressurized by known methods and a water/hydrocarbon mixture may be collected using one or more production wells. The water layer, however, may not mix with the hydrocarbon layer efficiently. Poor mixing efficiency may be due to a high interfacial tension between the water and hydrocarbons.

Production from a hydrocarbon containing formation may be enhanced by treating the hydrocarbon containing formation with a polymer and/or monomer that may mobilize hydrocarbons to one or more production wells. The polymer and/or monomer may reduce the mobility of the water phase in pores of the hydrocarbon containing formation. The reduction of water mobility may allow the hydrocarbons to be more easily mobilized through the hydrocarbon containing formation. Polymers include, but are not limited to, polyacrylamides, partially hydrolyzed polyacrylamide, polyacrylates, ethylenic copolymers, biopolymers, carboxymethylcellulose, polyvinyl alcohol, polystyrene sulfonates, polyvinylpyrrolidone, AMPS (2-acrylamide-2-methyl propane sulfonate) or combinations thereof. Examples of ethylenic copolymers include copolymers of acrylic acid and acrylamide, acrylic acid and lauryl acrylate, lauryl acrylate and acrylamide. Examples of biopolymers include xanthan gum and guar gum. In some embodiments, polymers may be cross linked in situ in a hydrocarbon containing formation. In other embodiments, polymers may be generated in situ in a hydrocarbon containing formation. Polymers and polymer preparations for use in oil recovery are described in U.S. Patent No. 6,427,268 to Zhang et al., entitled "Method For Making Hydrophobically Associative Polymers, Methods of Use and Compositions;" U.S. Patent No. 6,439,308 to Wang, entitled "Foam Drive Method;" U.S. Patent No. 5,654,261 to Smith, entitled, "Permeability Modifying Composition For Use In Oil Recovery;" U.S. Patent No. 5,284,206 to Surles et al., entitled "Formation Treating;" U.S. Patent 5,199,490 to Surles et al., entitled "Formation Treating" and U.S. Patent No. 5,103,909 to Morgenthaler et al., entitled "Profile Control In Enhanced Oil Recovery,". .

### The Hydrocarbon Recovery Composition

In an embodiment, a hydrocarbon recovery composition may be provided to the hydrocarbon containing formation. In this invention the composition comprises a blend of internal olefin sulfonates. Internal olefin sulfonates are chemically suitable for EOR because they have a low tendency to form ordered structures/liquid crystals (which can be a major issue because ordered structures tend to lead to plugging of the rock structure in hydrocarbon formations) because they are a complex mixture of surfactants with different chain lengths. Internal olefin sulfonates show a low tendency to adsorb on reservoir rock surfaces arising from negative-negative charge repulsion between the surface and the surfactant. The use of alkali further reduces the tendency for surfactants to adsorb and reduced losses means a lower concentration of the surfactant can be used making the process more economic.

As discussed above in detail, this invention is particularly useful in hydrocarbon containing formations which contain crude oil. The hydrocarbon recovery composition of this invention is designed to produce the best internal olefin sulfonate recovery composition.

An internal olefin is an olefin whose double bond is located anywhere along the carbon chain except at a terminal carbon atom. A linear internal olefin does not have any alkyl, aryl, or alicyclic branching on any of the double bond carbon atoms or on any carbon atoms adjacent to the double bond carbon atoms. Typical commercial products produced by isomerization of alpha olefins are predominantly linear and contain a low average number of branches per molecule.

The hydrocarbon recovery composition also comprises a viscosity reducing compound. This compound can be any compound that lowers the viscosity of the surfactant, but it is preferably a compound that lowers the viscosity such that the composition can be transported, pumped and injected into the hydrocarbon containing formation.

The viscosity reducing compound is iso-butyl alcohol, a C₂-C₁₂ ethoxylated alcohol, 2-butoxy ethanol, diethylene glycol butyl ether, or a mixture thereof.

The remainder of the composition may include, but is not limited to, water, organic solvents, alkyl sulfonates, aryl sulfonates, brine or combinations thereof. Organic solvents include, but are not limited to, methyl ethyl ketone, acetone, lower alkyl cellosolves, lower alkyl carbitols or combinations thereof.

### Manufacture of the Hydrocarbon Recovery Composition

The internal olefins that are used to make the internal olefin sulfonates of the present invention may be made by skeletal isomerization. Suitable processes for making the internal olefins include those described in U.S. Patents 5,510,306, 5,633,422, 5,648,584, 5,648,585, 5,849,960, and European Patent EP 0,830,315 B1, all of which are herein incorporated by reference in their entirety. A hydrocarbon stream comprising at least one linear olefin is contacted with a suitable catalyst, such as the catalytic zeolites described in the aforementioned patents, in a vapor phase at a suitable reaction temperature, pressure, and space velocity. Generally, suitable reaction conditions include a temperature of about 200 to about 650°C, an olefin partial pressure of above about 0.5 atmosphere, and a total pressure of about 0.5 to about 10.0 atmospheres or higher. Preferably, the internal olefins of the present invention are made at a temperature in the range of from about 200 to about 500°C at an olefin partial pressure of from about 0.5 to 2 atmospheres.

It is generally known that internal olefins are more difficult to sulfonate than alpha olefins (see "Tenside Detergents" 22 (1985) 4, pp. 193-195). In the article entitled "Why Internal Olefins are Difficult to Sulfonate," the authors state that by the sulfonation of various commercial and laboratory produced internal olefins using falling film reactors, internal olefins gave conversions of below 90 percent and further they state that it was found necessary to raise the SO₃:internal olefin mole ratio to over 1.6:1 in order to achieve conversions above 95 percent. Furthermore, there resulting products were very dark in color and had high levels of di- and poly-sulfonated products.

U.S. Patents 4,183,867 and 4,248,793, disclose processes which can be used to make the branched internal olefin sulfonates of the invention. They are carried out in a falling film reactor for the preparation of light color internal olefin sulfonates. The amounts of unreacted internal olefins are between 10 and 20 percent and at least 20 percent, respectively, in the processes and special measures must be taken to remove the unreacted internal olefins. The internal olefin sulfonates containing between 10 and 20 percent and at least 20 percent, respectively, of unreacted internal olefins must be purified before being used. Consequently, the preparation of internal olefin sulfonates having the desired light color and with the desired low free oil content offer substantial difficulty.

Such difficulties can be avoided by following the process disclosed in European Patent EP 0,351,928 B1.

A process which can be used to make internal olefin sulfonates for use in the present invention comprises reacting in a film reactor an internal olefin as described above with a sulfonating agent in a mole ratio of sulfonating agent to internal olefin of 1:1 to 1.5:1 while cooling the reactor with a cooling means having a temperature not exceeding 60 °C, directly neutralizing the obtained reaction product of the sulfonating step and, without extracting the unreacted internal olefin, hydrolyzing the neutralized reaction product.

In the preparation of the sulfonates derived from internal olefins, the internal olefins are reacted with a sulfonating agent, which may be sulfur trioxide, sulfuric acid, or oleum, with the formation of beta-sultone and some alkane sulfonic acids. The film reactor is preferably a falling film reactor.

The reaction products are neutralized and hydrolyzed. Under certain circumstances, for instance, aging, the beta-sultones are converted into gamma-sultones which may be converted into delta-sultones. After neutralization and hydrolysis, gamma-hydroxy sulfonates and delta-hydroxy sulfonates are obtained. A disadvantage of these two sultones is that they are more difficult to hydrolyze than beta-sultones. Thus, in most embodiments it is preferable to proceed without aging. The beta sultones, after hydrolysis, give beta-hydroxy sulfonates. These materials do not have to be removed because they form useful surfactant structures.

The cooling means, which is preferably water, has a temperature not exceeding 60 °C, especially a temperature in the range of from 0 to 50 °C. Depending upon the circumstances, lower temperatures may be used as well.

The reaction mixture is then fed to a neutralization hydrolysis unit. The neutralization/hydrolysis is carried out with a water soluble base, such as sodium hydroxide or sodium carbonate. The corresponding bases derived from potassium or ammonium are also suitable. The neutralization of the reaction product from the falling film reactor is generally carried out with excessive base, calculated on the acid component. Generally, neutralization is carried out at a temperature in the range of from 0 to 80 °C. Hydrolysis may be carried out at a temperature in the range of from 100 to 250 °C, preferably 130 to 200 °C. The hydrolysis time generally may be from 5 minutes to 4 hours. Alkaline hydrolysis may be carried out with hydroxides, carbonates, bicarbonates of (earth) alkali metals, and amine compounds.

This process may be carried out batchwise, semi-continuously, or continuously. The reaction is generally performed in a falling film reactor which is cooled by flowing a cooling means at the outside walls of the reactor. At the inner walls of the reactor, the internal olefin flows in a downward direction. Sulfur trioxide is diluted with a stream of nitrogen, air, or any other inert gas into the reactor. The concentration of sulfur trioxide generally is between 2 and 5 percent by volume based on the volume of the carrier gas. In the preparation of internal olefin sulfonates derived from the olefins of the present invention, it is required that in the neutralization hydrolysis step very intimate mixing of the reactor product and the aqueous base is achieved. This can be done, for example, by efficient stirring or the addition of a polar cosolvent (such as a lower alcohol) or by the addition of a phase transfer agent.

Typical internal olefin sulfonate compositions comprise about 30-35% active matter (the internal olefin sulfonate) in water. It is desirable to produce the internal olefin sulfonate composition in a manner such that the percent of active matter is as high as possible, which composition is hereinafter referred to as a high active matter surfactant composition. It is preferred for the concentration of active matter to be at least 40%, preferably at least 50%, and more preferably at least 60%. The concentration of active matter may be in a range of from 45% to 95%, preferably in a range of from 60% to 80%.

The surfactant composition is typically transported from the point of manufacture to the location of the hydrocarbon containing formation. High active matter surfactants are very hard to pump or handle, and they may be in the form of a paste or a non-flowable gel. While it is desirable to reduce the level of water that is transported with the surfactant, it is also desirable to be able to pump and otherwise transport the surfactant. This invention provides a composition that has a high active matter concentration, but is also able to be pumped and transported.

In order to lower the viscosity of the high active matter surfactants, a viscosity reducing compound is added to the surfactant composition after it is manufactured and before it is transported to the location of the hydrocarbon containing formation.

### Injection of the Hydrocarbon Recovery Composition

The hydrocarbon recovery composition may interact with hydrocarbons in at least a portion of the hydrocarbon containing formation. Interaction with the hydrocarbons may reduce an interfacial tension of the hydrocarbons with one or more fluids in the hydrocarbon containing formation. In other embodiments, a hydrocarbon recovery composition may reduce the interfacial tension between the hydrocarbons and an overburden/underburden of a hydrocarbon containing formation. Reduction of the interfacial tension may allow at least a portion of the hydrocarbons to mobilize through the hydrocarbon containing formation.

The ability of a hydrocarbon recovery composition to reduce the interfacial tension of a mixture of hydrocarbons and fluids may be evaluated using known techniques. In an embodiment, an interfacial tension value for a mixture of hydrocarbons and water may be determined using a spinning drop tensionmeter. An amount of the hydrocarbon recovery composition may be added to the hydrocarbon/water mixture and an interfacial tension value for the resulting fluid may be determined. A low interfacial tension value (e.g., less than about 1 dyne/cm) may indicate that the composition reduced at least a portion of the surface energy between the hydrocarbons and water. Reduction of surface energy may indicate that at least a portion of the hydrocarbon/water mixture may mobilize through at least a portion of a hydrocarbon containing formation.

In an embodiment, a hydrocarbon recovery composition may be added to a hydrocarbon/water mixture and the interfacial tension value may be determined. Preferably, the interfacial tension is less than about 0.1 dyne/cm . An ultralow interfacial tension value (e.g., less than about 0.01 dyne/cm) may indicate that the hydrocarbon recovery composition lowered at least a portion of the surface tension between the hydrocarbons and water such that at least a portion of the hydrocarbons may mobilize through at least a portion of the hydrocarbon containing formation. At least a portion of the hydrocarbons may mobilize more easily through at least a portion of the hydrocarbon containing formation at an ultra low interfacial tension than hydrocarbons that have been treated with a composition that results in an interfacial tension value greater than 0.01 dynes/cm for the fluids in the formation. Addition of a hydrocarbon recovery composition to fluids in a hydrocarbon containing formation that results in an ultra-low interfacial tension value may increase the efficiency at which hydrocarbons may be produced. A hydrocarbon recovery composition concentration in the hydrocarbon containing formation may be minimized to minimize cost of use during production.

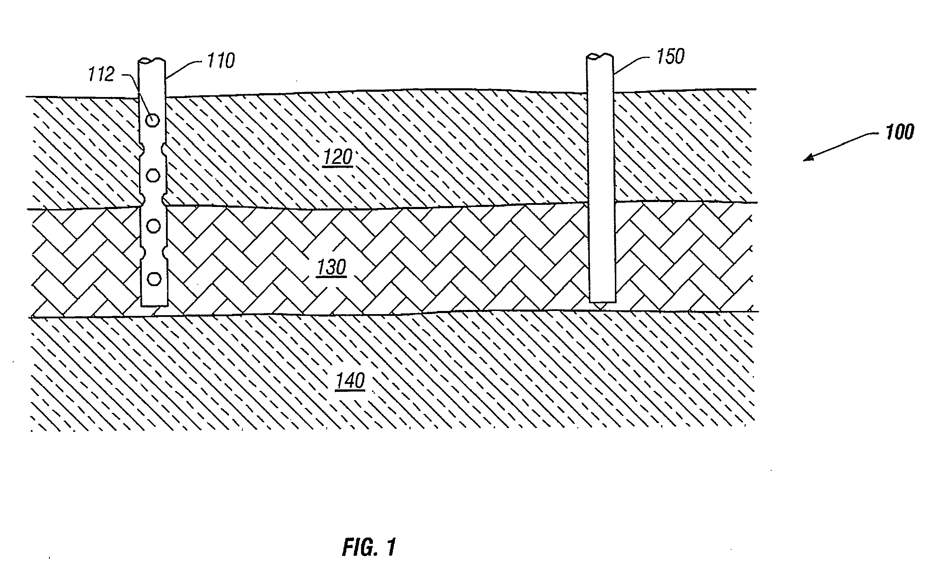

In an embodiment of a method to treat a hydrocarbon containing formation, a hydrocarbon recovery composition including an internal olefin sulfonate and a viscosity reducing compound may be provided (e.g., injected) into hydrocarbon containing formation 100 through injection well 110 as depicted in FIG. 1. Hydrocarbon formation 100 may include overburden 120, hydrocarbon layer 130, and underburden 140. Injection well 110 may include openings 112 that allow fluids to flow through hydrocarbon containing formation 100 at various depth levels. In certain embodiments, hydrocarbon layer 130 may be less than 1000 feet below earth's surface. In some embodiments, underburden 140 of hydrocarbon containing formation 100 may be oil wet. Low salinity water may be present in hydrocarbon containing formation 100, in other embodiments.

A hydrocarbon recovery composition may be provided to the formation in an amount based on hydrocarbons present in a hydrocarbon containing formation. The amount of hydrocarbon recovery composition, however, may be too small to be accurately delivered to the hydrocarbon containing formation using known delivery techniques (e.g., pumps). To facilitate delivery of small amounts of the hydrocarbon recovery composition to the hydrocarbon containing formation, the hydrocarbon recovery composition may be combined with water and/or brine to produce an injectable fluid.

In an embodiment, the hydrocarbon recovery composition is provided to the formation containing crude oil with heavy components by admixing it with brine from the formation from which hydrocarbons are to be extracted or with fresh water. The mixture is then injected into the hydrocarbon containing formation.

In an embodiment, the hydrocarbon recovery composition is provided to a hydrocarbon containing formation 100 by admixing it with brine from the formation. Preferably, the hydrocarbon recovery composition comprises from about 0.01 to about 2.00 wt% of the total water and/or brine/hydrocarbon recovery composition mixture (the injectable fluid). More important is the amount of actual active matter that is present in the injectable fluid (active matter is the surfactant, here the internal olefin sulfonate or the blend containing it). Thus, the amount of the internal olefin sulfonate in the injectable fluid may be from about 0.05 to about 1.0 wt%, preferably from about 0.1 to about 0.8 wt%. More than 1.0 wt% could be used but this would likely increase the cost without enhancing the performance. The injectable fluid is then injected into the hydrocarbon containing formation.

The hydrocarbon recovery composition may interact with at least a portion of the hydrocarbons in hydrocarbon layer 130. The interaction of the hydrocarbon recovery composition with hydrocarbon layer 130 may reduce at least a portion of the interfacial tension between different hydrocarbons. The hydrocarbon recovery composition may also reduce at least a portion of the interfacial tension between one or more fluids (e.g., water, hydrocarbons) in the formation and the underburden 140, one or more fluids in the formation and the overburden 120 or combinations thereof.

In an embodiment, a hydrocarbon recovery composition may interact with at least a portion of hydrocarbons and at least a portion of one or more other fluids in the formation to reduce at least a portion of the interfacial tension between the hydrocarbons and one or more fluids. Reduction of the interfacial tension may allow at least a portion of the hydrocarbons to form an emulsion with at least a portion of one or more fluids in the formation. An interfacial tension value between the hydrocarbons and one or more fluids may be altered by the hydrocarbon recovery composition to a value of less than about 0.1 dyne/cm. In some embodiments, an interfacial tension value between the hydrocarbons and other fluids in a formation may be reduced by the hydrocarbon recovery composition to be less than about 0.05 dyne/cm. An interfacial tension value between hydrocarbons and other fluids in a formation may be lowered by the hydrocarbon recovery composition to less than 0.001 dyne/cm, in other embodiments.

At least a portion of the hydrocarbon recovery composition/hydrocarbon/fluids mixture may be mobilized to production well 150. Products obtained from the production well 150 may include, but are not limited to, components of the hydrocarbon recovery composition (e.g., a long chain aliphatic alcohol and/or a long chain aliphatic acid salt), methane, carbon monoxide, water, hydrocarbons, ammonia, or combinations thereof. Hydrocarbon production from hydrocarbon containing formation 100 may be increased by greater than about 50% after the hydrocarbon recovery composition has been added to a hydrocarbon containing formation.

In certain embodiments, hydrocarbon containing formation 100 may be pretreated with a hydrocarbon removal fluid. A hydrocarbon removal fluid may be composed of water, steam, brine, gas, liquid polymers, foam polymers, monomers or mixtures thereof. A hydrocarbon removal fluid may be used to treat a formation before a hydrocarbon recovery composition is provided to the formation. Hydrocarbon containing formation 100 may be less than 1000 feet below the earth's surface, in some embodiments. A hydrocarbon removal fluid may be heated before injection into a hydrocarbon containing formation 100, in certain embodiments. A hydrocarbon removal fluid may reduce a viscosity of at least a portion of the hydrocarbons within the formation. Reduction of the viscosity of at least a portion of the hydrocarbons in the formation may enhance mobilization of at least a portion of the hydrocarbons to production well 150. After at least a portion of the hydrocarbons in hydrocarbon containing formation 100 have been mobilized, repeated injection of the same or different hydrocarbon removal fluids may become less effective in mobilizing hydrocarbons through the hydrocarbon containing formation. Low efficiency of mobilization may be due to hydrocarbon removal fluids creating more permeable zones in hydrocarbon containing formation 100. Hydrocarbon removal fluids may pass through the permeable zones in the hydrocarbon containing formation 100 and not interact with and mobilize the remaining hydrocarbons. Consequently, displacement of heavier hydrocarbons adsorbed to underburden 140 may be reduced over time. Eventually, the formation may be considered low producing or economically undesirable to produce hydrocarbons.

In certain embodiments, injection of a hydrocarbon recovery composition after treating the hydrocarbon containing formation with a hydrocarbon removal fluid may enhance mobilization of heavier hydrocarbons absorbed to underburden 140. The hydrocarbon recovery composition may interact with the hydrocarbons to reduce an interfacial tension between the hydrocarbons and underburden 140. Reduction of the interfacial tension may be such that hydrocarbons are mobilized to and produced from production well 150. Produced hydrocarbons from production well 150 may include, in some embodiments, at least a portion of the components of the hydrocarbon recovery composition, the hydrocarbon removal fluid injected into the well for pretreatment, methane, carbon dioxide, ammonia, or combinations thereof. Adding the hydrocarbon recovery composition to at least a portion of a low producing hydrocarbon containing formation may extend the production life of the hydrocarbon containing formation. Hydrocarbon production from hydrocarbon containing formation 100 may be increased by greater than about 50% after the hydrocarbon recovery composition has been added to hydrocarbon containing formation. Increased hydrocarbon production may increase the economic viability of the hydrocarbon containing formation.

Interaction of the hydrocarbon recovery composition with at least a portion of hydrocarbons in the formation may reduce at least a portion of an interfacial tension between the hydrocarbons and underburden 140. Reduction of at least a portion of the interfacial tension may mobilize at least a portion of hydrocarbons through hydrocarbon containing formation 100. Mobilization of at least a portion of hydrocarbons, however, may not be at an economically viable rate.

In one embodiment, polymers and/or monomers may be injected into hydrocarbon formation 100 through injection well 110, after treatment of the formation with a hydrocarbon recovery composition, to increase mobilization of at least a portion of the hydrocarbons through the formation. Suitable polymers include, but are not limited to, CIBA^{®} ALCOFLOOD^{®}, manufactured by Ciba Specialty Additives (Tarrytown, New York), Tramfloc^{®} manufactured by Tramfloc Inc. (Temple, Arizona), and HE^{®} polymers manufactured by Chevron Phillips Chemical Co. (The Woodlands, Texas). Interaction between the hydrocarbons, the hydrocarbon recovery composition and the polymer may increase mobilization of at least a portion of the hydrocarbons remaining in the formation to production well 150.

The internal olefin sulfonate of the composition is thermally stable and may be used over a wide range of temperature. The hydrocarbon recovery composition may be added to a portion of a hydrocarbon containing formation 100 that has an average temperature of above about 70°C because of the high thermal stability of the internal olefin sulfonate.

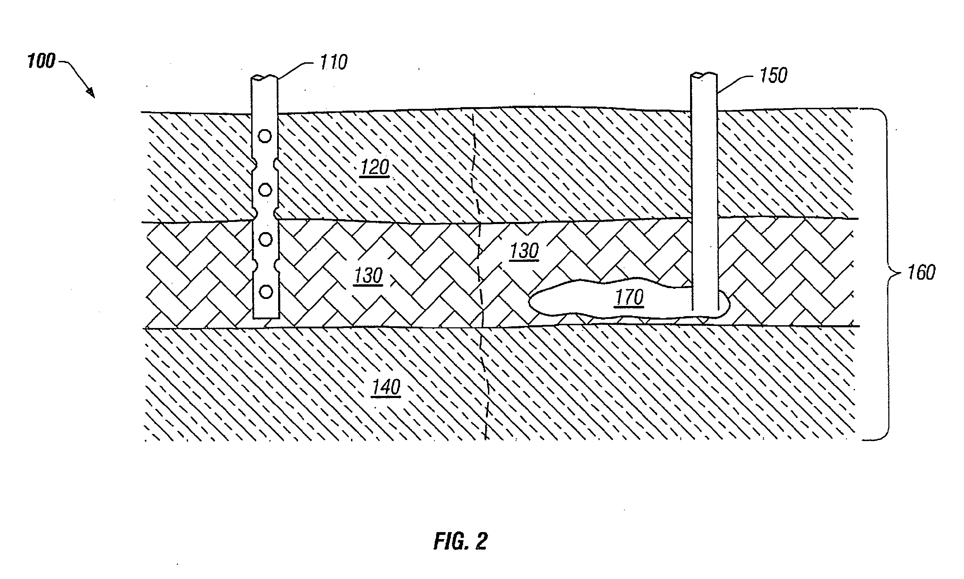

In some embodiments, a hydrocarbon recovery composition may be combined with at least a portion of a hydrocarbon removal fluid (e.g. water, polymer solutions) to produce an injectable fluid. The hydrocarbon recovery composition may be injected into hydrocarbon containing formation 100 through injection well 110 as depicted in FIG. 2. Interaction of the hydrocarbon recovery composition with hydrocarbons in the formation may reduce at least a portion of an interfacial tension between the hydrocarbons and underburden 140. Reduction of at least a portion of the interfacial tension may mobilize at least a portion of hydrocarbons to a selected section 160 in hydrocarbon containing formation 100 to form hydrocarbon pool 170. At least a portion of the hydrocarbons may be produced from hydrocarbon pool 170 in the selected section of hydrocarbon containing formation 100.

In other embodiments, mobilization of at least a portion of hydrocarbons to selected section 160 may not be at an economically viable rate. Polymers may be injected into hydrocarbon formation 100 to increase mobilization of at least a portion of the hydrocarbons through the formation. Interaction between at least a portion of the hydrocarbons, the hydrocarbon recovery composition and the polymers may increase mobilization of at least a portion of the hydrocarbons to production well 150.

In some embodiments, a hydrocarbon recovery composition may include an inorganic salt (e.g. sodium carbonate (Na₂CO₃), sodium hydroxide, sodium chloride (NaCl), or calcium chloride (CaCl₂)). The addition of the inorganic salt may help the hydrocarbon recovery composition disperse throughout a hydrocarbon/water mixture. The enhanced dispersion of the hydrocarbon recovery composition may decrease the interactions between the hydrocarbon and water interface. The use of an alkali (e.g., sodium carbonate, sodium hydroxide) may prevent adsorption of the IOS onto the rock surface and may create natural surfactants with components in the crude oil. The decreased interaction may lower the interfacial tension of the mixture and provide a fluid that is more mobile. The alkali may be added in an amount of from about 0.1 to 5 wt%.

In the present invention, the unit cP=0.001 Pa·s.

### EXAMPLES

### Example 1

This Example illustrates the use of viscosity reducing compounds to lower the viscosity of high active matter surfactant compositions. The results show the effect of solvent dilution of high active matter surfactants on viscosity at 60 °C and 10 sec⁻¹. The high active matter surfactants were diluted by 25%, calculated as percent of the total sample. The results are provided in Table 1. The viscosity was measured with a Brookfield Viscometer with a LV4 spindle.

**Table 1**

| Surfactant | Tap Water | Ethanol | Iso-butyl alcohol | Sec-butyl alcohol | DGBE |
|---|---|---|---|---|---|
| IOS 24-28, 63% active | 18891 cP | 833 cP | 2540 cP | 833 cP | 1746 cP |
| IOS 20-24, 73% active | 10993 cP | 1190 cP | 1389 cP | 1389 cP | 515 cP |
| IOS 15-18, 77.5% active | 6270 cP | 952 cP | 2103 cP | 1150 cP | 1666 cP |

| | | | | | |
|---|---|---|---|---|---|
| DGBE = diethylene glycol monobutyl ether | | | | | |

### Example 2

This Example illustrates the use of viscosity reducing compounds to lower the viscosity of high active matter (66.3%) C₁₉₋₂₃ internal olefin sulfonate (IOS 19-23). This material has a viscosity of 4900 cp at 60 °C and 1 sec⁻¹. The results show the effect of solvent dilution of this IOS 19-23 on viscosity at 60 °C and 1 sec⁻¹. The IOS 19-23 was diluted by 1, 5 and 10% calculated as percent of the active matter. The results are provided in Table 2. The viscosity was measured with a Brookfield Viscometer with a LV4 spindle.

**Table 2**

| Additive (% dilution on active matter) | EGBE | DGBE | Neodol 91-8 alcohol ethoxylate |
|---|---|---|---|
| 1 | 6000 cP | 4100 cP | 4900 cP |
| 5 | 1700 cP | 2500 cP | 4800 cP |
| 10 | 1100 cP | 1000 cP | 4400 cP |

| | | | |
|---|---|---|---|
| EGBE = 2-butoxy ethanol DGBE = diethylene glycol monobutyl ether | | | |

## Claims

1. A method of treating a formation containing crude oil comprising:
(a) providing a hydrocarbon recovery composition to at least a portion of the crude oil containing formation, wherein the composition comprises at least two internal olefin sulfonates selected from the group consisting of C₁₅₋₁₃ internal olefin sulfonates, C₁₉₋₂₃ internal olefin sulfonates, C₂₀₋₂₄ internal olefin sulfonates and C₂₄₋₂₈ internal olefin sulfonates, and at least one viscosity reducing compound which is iso-butyl alcohol, a C₂-C₁₂ ethoxylated alcohol, 2-butoxy ethanol, diethylene glycol butyl ether, or a mixture thereof; and
(b) allowing the composition to interact with hydrocarbons in the crude oil containing formation.

2. The method of claim 1 wherein the hydrocarbon recovery composition is provided to the crude oil containing formation by first admixing it with water and/or brine from the formation from which crude oil is to be extracted to form an injectable fluid, wherein the internal olefin sulfonate comprises from 0.05 to 1.0 wt%, preferably from 0.1 to 0.8 wt% of the injectable fluid, and then injecting the injectable fluid into the formation.

3. The method of claim 1 or 2 wherein the viscosity reducing compound is selected from the group consisting of iso-butyl alcohol, 2-butoxy ethanol, diethylene glycol butyl ether and mixtures thereof.

4. A method of reducing the viscosity of a high active matter surfactant composition having a concentration of active matter of from 30% to 95% comprising contacting a composition comprising at least two internal olefin sulfonates selected from the group consisting of C₁₅₋₁₈ internal olefin sulfonates, C₁₉₋₂₃ internal olefin sulfonates, C₂₀₋₂₄ internal olefin sulfonates and C₂₄₋₂₈ internal olefin sulfonates with a viscosity reducing compound to produce a hydrocarbon recovery composition, wherein the viscosity reducing compound is iso-butyl alcohol, a C₂-C₁₂ ethoxylated alcohol, 2-butoxy ethanol, diethylene glycol butyl ether, or a mixture thereof.

5. The method of claim 4 wherein the viscosity reducing compound is selected from the group consisting of iso-butyl alcohol, 2-butoxy ethanol, diethylene glycol butyl ether and mixtures thereof.

6. The method of claim 4 or 5 wherein the high active matter surfactant composition has a concentration of active matter of from 55% to 80%.

7. The method of any one of claims 4 to 6 wherein the viscosity reducer is added in an amount of from 5% to 25%, calculated as percent of the active matter.

8. The method of any one of claims 4 to 7 wherein the viscosity reducer is added in an amount of from 5% to 15%, calculated as percent of the active matter.

9. The method of any one of claims 4 to 6 wherein the internal olefin sulfonate composition comprises C₂₀₋₂₄ IOS.

10. A hydrocarbon recovery composition which comprises at least two internal olefin sulfonates selected from the group consisting of C₁₅₋₁₈ internal olefin sulfonates, C₁₉₋₂₃ internal olefin sulfonates, C₂₀₋₂₄ internal olefin sulfonates and C₂₄₋₂₈ internal olefin sulfonates, and a viscosity reducing compound which is iso-butyl alcohol, a C₂-C₁₂ ethoxylated alcohol, 2-butoxy ethanol, diethylene glycol butyl ether, or a mixture thereof.

11. The composition of claim 10 wherein the viscosity reducing compound is diethylene glycol butyl ether.

12. The composition of claim 10 or 11 which also comprises alkali in an amount of from 0.1 to 5 wt%.

13. The composition of any one of claims 11 to 12 wherein the internal olefin sulfonate comprises C₂₀₋₂₄ IOS.

14. The composition of any one of claims 11 to 12 wherein the internal olefin sulfonate comprises C₁₉₋₂₃ IOS.

## Patentansprüche

1. Verfahren zur Behandlung einer Formation, die Rohöl enthält, umfassend:
(a) Anwenden einer Kohlenwasserstoffgewinnungs-Zusammensetzung auf mindestens einen Teil der Rohöl enthaltenden Formation, wobei die Zusammensetzung mindestens zwei interne Olefinsulfonate umfasst, ausgewählt aus der Gruppe, bestehend aus C₁₅₋₁₈ internen Olefinsulfonaten, C₁₉₋₂₃ internen Olefinsulfonaten, C₂₀₋₂₄ internen Olefinsulfonaten und C₂₄₋₂₈ internen Olefinsulfonaten, und mindestens eine Viskosität-reduzierenden Verbindung, wobei es sich um iso-Butylalkohol, einen C₂-C₁₂-ethoxylierten Alkohol, 2-Butoxyethanol, Diethylenglycolbutylether oder eine Mischung davon handelt; und
(b) Ermöglichen, dass die Zusammensetzung mit den Kohlenwasserstoffen in der Rohöl enthaltenden Formation in Wechselwirkung tritt.

2. Verfahren nach Anspruch 1, wobei die Kohlenwasserstoffgewinnungs-Zusammensetzung auf die Rohöl enthaltende Formation angewendet wird, indem sie zuerst mit Wasser und/oder Kochsalzlösung aus der Formation gemischt wird, aus dem Rohöl extrahiert werden soll, um ein injizierbares Fluid zu bilden, wobei das interne Olefinsulfonat von 0,05 bis 1,0 Gew%, vorzugsweise 0,1 bis 0,8 Gew% der injizierbaren Flüssigkeit umfasst, und dann das injizierbare Fluid in die Formation injiziert wird.

3. Verfahren nach Anspruch 1 oder 2, wobei die Viskosität-reduzierende Verbindung ausgewählt ist aus der Gruppe, bestehend aus iso-Butylalkohol, 2-Butoxyethanol, Diethylenglycolbutylether und Mischungen davon.

4. Verfahren zur Reduzierung der Viskosität einer Tensidzusammensetzung mit hohem Aktivstoffgehalt mit einer Konzentration von Aktivstoff von 30 % bis 95 %, umfassend das In-Kontakt-Bringen einer Zusammensetzung, die mindestens zwei interne Olefinsulfonate umfasst, ausgewählt aus der Gruppe, bestehend aus C₁₅₋₁₈ internen Olefinsulfonaten, C₁₉₋₂₃ internen Olefinsulfonaten, C₂₀₋₂₄ internen Olefinsulfonaten, und C₂₄₋₂₈ internen Olefinsulfonaten mit einer Viskosität-reduzierenden Verbindung, um eine Kohlenwasserstoffgewinnungs-Zusammensetzung zu erzeugen, wobei es sich bei der Viskosität-reduzierenden Verbindung um iso-Butylalkohol, einen C₂-C₁₂-ethoxylierten Alkohol, 2-Butoxyethanol, Diethylenglycolbutylether oder eine Mischung davon handelt.

5. Verfahren nach Anspruch 4, wobei die Viskosität-reduzierende Verbindung ausgewählt ist aus der Gruppe, bestehend aus iso-Butylalkohol, 2-Butoxyethanol, Diethylenglycolbutylether und Mischungen davon.

6. Verfahren nach Anspruch 4 oder 5, wobei die Tensidzusammensetzung mit hohem Aktivstoffgehalt eine Konzentration von Aktivstoff von 55 % bis 80 % aufweist.

7. Verfahren nach einem der Ansprüche 4 bis 6, wobei der Viskosität-Reduzierer in einer Menge von 5 % bis 25 % zugegeben wird, berechnet als Prozent des Aktivstoffs.

8. Verfahren nach einem der Ansprüche 4 bis 7, wobei der Viskosität-Reduzierer in einer Menge von 5 % bis 15 % zugegeben wird, berechnet als Prozent des Aktivstoffs.

9. Verfahren nach einem der Ansprüche 4 bis 6, wobei die Zusammensetzung aus internem Olefinsulfonat C₂₀₋₂₄ IOS umfasst.

10. Kohlenwasserstoffgewinnungs-Zusammensetzung, die mindestens zwei interne Olefinsulfonat umfasst, ausgewählt aus der Gruppe, bestehend aus C₁₅₋₁₈ internen Olefinsulfonaten, C₁₉₋₂₃ internen Olefinsulfonaten, C₂₀₋₂₄ internen Olefinsulfonaten und C₂₄₋₂₈ internen Olefinsulfonaten, und eine Viskosität-reduzierende Verbindung, wobei es sich um iso-Butylalkohol, einen C₂-C₁₂-ethoxylierten Alkohol, 2-Butoxyethanol, Diethylenglycolbutylether oder eine Mischung davon handelt.

11. Zusammensetzung nach Anspruch 10, wobei die Viskosität-reduzierende Verbindung, Diethylenglycolbutylether ist.

12. Zusammensetzung nach Anspruch 10 oder 11, die auch Alkali in einer Menge von 0,1 bis 5 Gew% umfasst.

13. Zusammensetzung nach einem der Ansprüche 11 bis 12, wobei das interne Olefinsulfonat C₂₀₋₂₄ IOS umfasst.

14. Zusammensetzung nach einem der Ansprüche 11 bis 12, wobei das interne Olefinsulfonat C₁₉₋₂₃ IOS umfasst.

## Revendications

1. Procédé de traitement d'une formation contenant une huile brute comprenant :
(a) la fourniture d'une composition de récupération d'hydrocarbures à au moins une partie de la formation contenant une huile brute, la composition comprenant au moins deux sulfonates d'oléfine internes choisis dans le groupe constitué de sulfonates d'oléfine internes en C₁₅ à C₁₈, de sulfonates d'oléfine internes en C₁₉ à C₂₃, de sulfonates d'oléfine internes en C₂₀ à C₂₄ et de sulfonates d'oléfine internes en C₂₄ à C₂₈, et au moins un composé réduisant la viscosité qui est l'alcool iso-butylique, un alcool éthoxylé en C₂ à C₁₂, le 2-butoxy-éthanol, l'éther butylique de diéthylène glycol, ou l'un de leurs mélanges ; et
(b) une étape permettant à la composition d'interagir avec les hydrocarbures dans la formation contenant une huile brute.

2. Procédé selon la revendication 1, dans lequel la composition de récupération d'hydrocarbures est fournie à la formation contenant une huile brute en la mélangeant d'abord avec de l'eau et/ou de la saumure provenant de la formation à partir de laquelle l'huile brute doit être extraite pour former un liquide injectable, où le sulfonate d'oléfine interne compose de 0,05 à 1,0 % en poids, de préférence de 0,1 à 0,8 % en poids du liquide injectable, et en injectant ensuite le liquide injectable dans la formation.

3. Procédé selon la revendication 1 ou 2, dans lequel le composé réduisant la viscosité est choisi dans le groupe constitué d'alcool iso-butylique, de 2-butoxy-éthanol, d'éther butylique de diéthylène glycol et de leurs mélanges.

4. Procédé de réduction de la viscosité d'une composition tensioactive riche en substance active ayant une concentration de substance active de 30 % à 95 % comprenant la mise en contact d'une composition comprenant au moins deux sulfonates d'oléfine internes choisis dans le groupe constitué de sulfonates d'oléfine internes en C₁₅ à C₁₈, de sulfonates d'oléfine internes en C₁₉ à C₂₃, de sulfonates d'oléfine internes en C₂₀ à C₂₄ et de sulfonates d'oléfine internes en C₂₄ à C₂₈ avec un composé réduisant la viscosité pour produire une composition de récupération d'hydrocarbures, le composé réduisant la viscosité étant l'alcool iso-butylique, un alcool éthoxylé en C₂ à C₁₂, le 2-butoxy-éthanol, l'éther butylique de diéthylène glycol, ou l'un de leurs mélanges.

5. Procédé selon la revendication 4, dans lequel le composé réduisant la viscosité est choisi dans le groupe constitué d'alcool iso-butylique, de 2-butoxy-éthanol, d'éther butylique de diéthylène glycol et de leurs mélanges.

6. Procédé selon la revendication 4 ou 5, dans lequel la composition tensioactive riche en substance active a une concentration de substance active de 55 % à 80 %.

7. Procédé selon l'une quelconque des revendications 4 à 6, dans lequel le réducteur de viscosité est ajouté dans une quantité de 5 % à 25 %, calculée en pourcentage de la substance active.

8. Procédé selon l'une quelconque des revendications 4 à 7, dans lequel le réducteur de viscosité est ajouté dans une quantité de 5 % à 15 %, calculée en pourcentage de la substance active.

9. Procédé selon l'une quelconque des revendications 4 à 6, dans lequel la composition de sulfonate d'oléfine interne comprend des SOI en C₂₀ à C₂₄.

10. Composition de récupération d'hydrocarbures qui comprend au moins deux sulfonates d'oléfine internes choisis dans le groupe constitué de sulfonates d'oléfine internes en C₁₅ à C₁₈, de sulfonates d'oléfine internes en C₁₉ à C₂₃, de sulfonates d'oléfine internes en C₂₀ à C₂₄ et de sulfonates d'oléfine internes en C₂₄ à C₂₈, et un composé réduisant la viscosité qui est l'alcool iso-butylique, un alcool éthoxylé en C₂ à C₁₂, le 2-butoxy-éthanol, l'éther butylique de diéthylène glycol, ou l'un de leurs mélanges.

11. Composition selon la revendication 10, dans laquelle le composé réduisant la viscosité est l'éther butylique de diéthylène glycol.

12. Composition selon la revendication 10 ou 11, qui comprend également un alcali dans une quantité de 0,1 à 5 % en poids.

13. Composition selon l'une quelconque des revendications 11 à 12, dans laquelle le sulfonate d'oléfine interne comprend des SOI en C₂₀ à C₂₄.

14. Composition selon l'une quelconque des revendications 11 à 12, dans laquelle le sulfonate d'oléfine interne comprend des SOI en C₁₉ à C₂₃.
